# EUROPÄISCHE PATENTANMELDUNG

(11) **EP 0 809 372 A2**
(43) Veröffentlichungstag der Anmeldung: **26.11.1997**
(21) Anmeldenummer: 97401047.2
(22) Anmeldetag: 09.05.1997
(51) Int. Cl.: H04J 13/00, H04J 14/00

(54) **Optische Netzwerkeinheit und Zentrale eines optischen Kommunikationsnetzes**

(30) Priorität: 23.05.1996 DE 19620723
(71) Anmelder: ALCATEL ALSTHOM COMPAGNIE GENERALE D'ELECTRICITE, 75008 Paris (FR)
(72) Erfinder: Pfeiffer, Thomas, 70569 Stuttgart (DE)
(74) Vertreter: Knecht, Ulrich Karl, Dipl.-Ing.

(57) **Zusammenfassung**

Optische Kommunikationsnetze (NET) dienen der bidirektionalen Übertragung von Informationen zwischen einer Zentrale (OLT) und mehreren optischen Netzwerkeinheiten (ONU), die über optische Glasfaserleitungen miteinander verbunden sind. Das erfindungsgemäße Kommunikationsnetz (NET) arbeitet mit Signalgemischen aus Referenzimpulsen und mit Datenpaketen, die in den zeitlichen Lücken zwischen den Referenzimpulsen übertragen werden. Die Signalgemische werden zu allen optischen Netzwerkeinheiten (ONU) übertragen. Jede optische Netzwerkeinheit (ONU) überträgt ihren jeweiligen Datenstrom im asynchronen CDMA-Verfahren zur Zentrale (OLT), indem sie die empfangenen Referenzimpulse mit dem jeweiligen Datenstrom in einer elektro/optischen Einheit (S1) moduliert und die modulierten Referenzimpulse in einem CDMA-Kodierer (C1) nach dem CDMA-Verfahren kodiert.

## Beschreibung

Die Erfindung betrifft eine optische Netzwerkeinheit eines optischen Kommunikationsnetzes nach Patentanspruch 1 und eine Zentrale nach Patentanspruch 8.

Optische Kommunikationsnetze erfordern in jeder optischen Netzwerkeinheit einen optischen Sender. Zur Einsparung der Sender wurde in Electronic Letters, 1st September 1994, Vol. 30, No. 18, pages 1506-1507, ein optisches LAN in Sternstruktur mit einem zentralen Laser aufgebaut. Der zentrale Laser liefert Referenzimpulse, die zu allen Netzwerkeinheiten übertragen werden. In jeder Netzwerkeinheit werden die empfangenen Referenzimpulse über einen elektro/optischen Schalter mit dem jeweiligen digitalen Datenstrom im TDMA-Verfahren moduliert und anschließend ins Kommunikationsnetz reflektiert. Aufgrund von Laufzeitunterschieden, z.B. hervorgerufen durch Temperaturschwankungen, können Synchronisationsprobleme auftreten. Die Reflexion der modulierten Referenzimpulse ist verlustbehaftet und kann zu Interferenzen mit den unmodulierten Referenzimpulsen führen. Des weiteren müssen die optischen Netzwerkeinheiten untereinander synchronisiert werden.

Es ist deshalb Aufgabe der Erfindung, optische Sender in optischen Netzwerkeinheiten einzusparen.

Diese Aufgabe wird durch die Lehre der Patentansprüche 1 und 8 gelöst. Vorteilhafte Ausgestaltungen sind den abhängigen Patentansprüchen 2 bis 7 und 9 bis 10 zu entnehmen.

Im folgenden wird die Erfindung anhand eines Ausführungsbeispiels unter Zuhilfenahme der Figuren 1 bis 3 erläutert. Es zeigen:
- Fig. 1: eine schematische Darstellung eines erfindungsgemäßen Kommunikationsnetzes,
- Fig. 2: drei Diagramme von Signalverläufen und
- Fig. 3: einen schematisch dargestellten Aufbau eines CDMA-Kodierers.

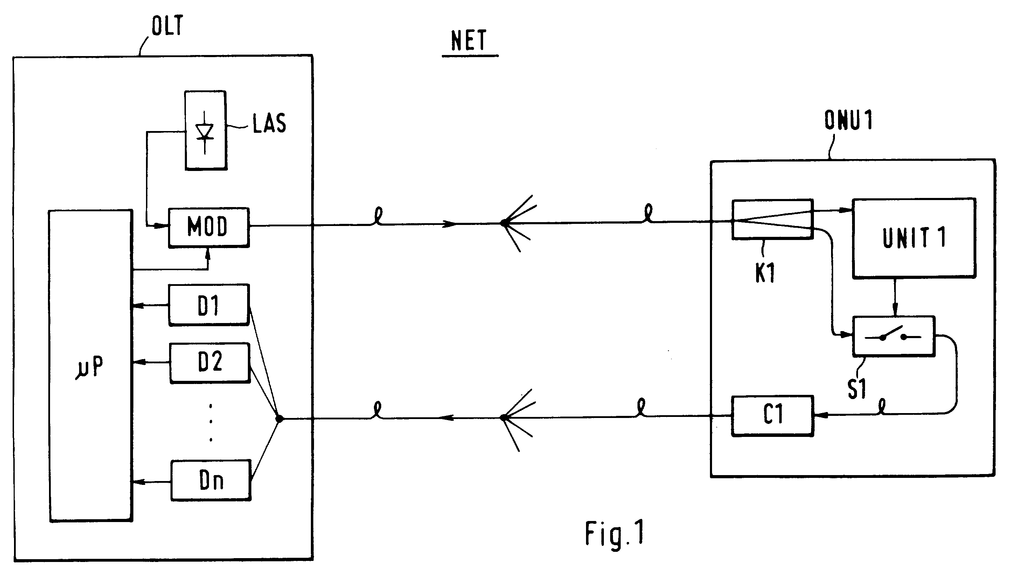

Das Ausführungsbeispiel wird nun zunächst anhand von Fig. 1 beschrieben. Fig. 1 zeigt ein Kommunikationsnetz NET. Das Kommunikationsnetz NET ist ein bidirektionales Netz. Es beinhaltet eine Zentrale OLT, die über optische Glasfaserleitungen mit mehreren optischen Netzwerkeinheiten ONU verbunden ist, von denen eine dargestellt ist. Zur Übertragung von Informationen von der Zentrale OLT zu den Netzwerkeinheiten ONU sind die Glasfaserleitungen mittels optischer Splitter in Stern- oder Baumkonfiguration ausgebildet. Unabhängig von diesen Glasfaserleitungen sind weitere Glasfaserleitungen vorhanden, die ebenfalls in Stern- oder Baumkonfiguration ausgebildet sind und zur Übertragung von Informationen von den optischen Netzwerkeinheiten ONU zur Zentrale OLT dienen.

Die Übertragung von Informationen von der Zentrale OLT zu den optischen Netzwerkeinheiten ONU erfolgt im optischen Zeitmultiplexverfahren, dem sogenannten TDM = Time Division Multiplex. Dazu werden in der Zentrale OLT Datenpakete generiert, die zeitlich nacheinander über die Glasfaserleitungen zu allen optischen Netzwerkeinheiten ONU übertragen werden. Jedes Datenpaket hat am Anfang eine Adresse, die angibt, für welche optische Netzwerkeinheit ONU es bestimmt ist. Neben den Datenpaketen werden in der Zentrale OLT Referenzimpulse generiert. Die Referenzimpulse werden periodisch ausgesandt. Sie haben zwei Funktionen: Erstens können sich die optischen Netzwerkeinheiten mittels dieser Referenzimpulse auf die empfangenen Informationen synchronisieren. Zweitens können die optischen Netzwerkeinheiten ONU die empfangenen optischen Referenzimpulse dazu benutzen, ohne eigenen optischen Sender Informationen zur Zentrale OLT zu übertragen, in dem sie die optischen Referenzimpulse mit ihren eigenen Datenströmen modulieren und über die Glasfaserleitungen zur Zentrale OLT weiterleiten. Von der Zentrale OLT werden somit Signalgemische aus Referenzimpulsen und Datenpaketen ausgesendet. Die Datenpakete werden in den zeitlichen Lücken der Referenzimpulse übertragen.

Die Übertragung von Informationen von den optischen Netzwerkeinheiten ONU zur Zentrale OLT erfolgt im asynchronen CDMA-Verfahren; CDMA = Code Division Multiple Access. CDMA ist ein Zugriffsverfahren, bei dem jeder optischen Netzwerkeinheit ONU ein Code zugewiesen wird. Jede optische Netzwerkeinheit ONU empfängt die Signalgemische aus Referenzimpulsen und Datenpaketen von der Zentrale OLT. Die Datenpakete werden bei Übereinstimmung der Adressen ausgewertet. Die empfangenen Referenzimpulse werden mit dem die zu übertragenden Informationen beinhaltenden Datenstrom moduliert und nach dem CDMA-Verfahren kodiert, bevor sie über die Glasfaserleitungen zur Zentrale OLT weitergeleitet werden. In jeder optischen Netzwerkeinheit ONU erfolgt die Kodierung mit einem individuellen Code. Der Code ist beispielsweise die Adresse der jeweiligen optischen Netzwerkeinheit ONU. In der Zentrale OLT werden die nach dem CDMA-Verfahren kodierten Referenzimpulse empfangen, dekodiert und ausgewertet.

Die Kommunikation zwischen Zentrale OLT und optischen Netzwerkeinheiten ONU kann breitbandig erfolgen. Damit kann beispielsweise ein optisches LAN aufgebaut werden, bei dem die optischen Netzwerkeinheiten ONU über die Zentrale OLT breitbandig miteinander kommunizieren, z. B. Datenübertragungen durchführen.

Die Zentrale OLT ist eine sogenannte Optical Line Termination. Sie beinhaltet eine Lichtquelle LAS, einen elektro/optischen Modulator MOD, mehrere CDMA-Dekodierer D1, D2, ..., Dn und eine Recheneinheit µP. n ist eine natürliche Zahl, die der Anzahl der optischen Netzwerkeinheiten ONU entspricht, die bidirektional kommunizieren wollen und aus diesem Grund jeweils einen CDMA-Kodierer beinhalten. Die Lichtquelle LAS beinhaltet eine Laserdiode, mittels derer zeitkontinuierliches Licht im Wellenlängenfenster 1520nm bis 1570nm generiert wird. Die Recheneinheit µP ist als Mikroprozessor ausgeführt. In der Recheneinheit µP werden elektrische Signale generiert. Die elektrischen Signale sind Signalgemische aus Referenzimpulsen und Datenpaketen. Die Referenzimpulse werden periodisch ausgesendet, so daß sich die optischen Netzwerkeinheiten ONU darauf synchronisieren können und die Referenzimpulse mit ihren eigenen Datenströmen modulieren, kodieren und zur Zentrale OLT weiterleiten können, um auf diese Weise ohne eigenen optischen Sender Informationen zur Zentrale OLT übertragen zu können.

Die Ausgangssignale der Lichtquelle LAS werden dem optischen Eingang des elektro/optischen Modulators MOD zugeführt, wo es mittels der am elektrischen Eingang des elektro/optischen Modulators MOD anliegenden elektrischen Signale moduliert wird und anschließend zu den optischen Netzwerkeinheiten ONU übertragen wird.

Die Datenpakete dienen dazu, Informationen von der Zentrale OLT zu den optischen Netzwerkeinheiten ONU zu übertragen. Die ausgesendeten Datenpakete werden von allen Netzwerkeinheiten ONU empfangen. Demzufolge können sie Informationen enthalten, die für alle Netzwerkeinheiten ONU bestimmt sind, z.B. Kabelfernsehsignale oder Informationen, die für einzelne, ausgewählte Netzwerkeinheiten ONU1 bestimmt sind, z.B. Video-on-demand Signale oder Informationen, die für eine ausgewählte Gruppe von Netzwerkeinheiten ONU bestimmt sind, z.B. Videokonferenzsignale.

Die Datenpakete werden in den zeitlichen Lücken zwischen den Referenzimpulsen übertragen.

Die einzelnen optischen Netzwerkeinheiten ONU haben nach dem asynchronen CDMA-Verfahren Zugriff auf die optischen Glasfaserleitungen zur Übertragung von Informationen von den optischen Netzwerkeinheiten ONU zur Zentrale OLT.

Die CDMA-Dekodierer D1 bis Dn dienen dazu die von den optischen Netzwerkeinheiten ONU nach dem CDMA-Verfahren kodierten und ausgesendeten Datenströme in der Zentrale OLT zu dekodieren. Jeder CDMA-Dekodierer D1; D2; ...; Dn ist einem CDMA-Kodierer und damit einer optischen Netzwerkeinheit ONU1 zugeordnet. Am Ausgang des CDMA-Dekodierers D1 steht somit der von der optischen Netzwerkeinheit ONU1 ausgesendete Datenstrom unkodiert zur Verfügung. Dieser wird, wie die Ausgangssignale der anderen CDMA-Dekodierer D2 bis Dn der Recheneinheit µP zugeführt, in der sie weiterverarbeitet werden. Ein Datenstrom beinhaltet beispielsweise ein Anforderungssignal für einen Videofilm, woraufhin von der Recheneinheit µP der angeforderte Videofilm von einem nicht dargestellten Videofilmspeicher abgerufen und über den elektro/optischen Modulator in Form eines oder mehrerer Datenpakete beispielsweise in Echtzeit zu den optischen Netzwerkeinheiten ONU übertragen wird. Die Datenpakete sind verschlüsselt, so daß nur berechtigte optische Netzwerkeinheiten ONU Zugriff auf diese Datenpakete haben.

Zwei oder mehrere optische Netzwerkeinheiten ONU können auch miteinander kommunizieren. In diesem Fall werden die in der Zentrale OLT empfangenen Datenströme als Datenpakete mit Angabe der zum Lesen berechtigten optischen Netzwerkeinheiten ONU zu den optischen Netzwerkeinheiten ONU übertragen.

Die optische Netzwerkeinheit ONU1 beinhaltet einen asymmetrischen Koppler K1, eine Verarbeitungseinheit UNIT1, eine elektro/optische Einheit S1 und einen CDMA-Kodierer C1.

Im asymmetrischen Koppler K1 werden die von der Zentrale OLT ausgesendeten Signalgemische empfangen. Es werden beispielsweise 80% der Lichtleistung der empfangenen Signalgemische ausgekoppelt und der elektro/optischen Einheit S1 zugeführt und 20% der Lichtleistung der Verarbeitungseinheit UNIT 1 zugeführt.

Die Verarbeitungseinheit UNIT1 dient dazu die empfangenen Signalgemische auszuwerten. So wird beispielsweise geprüft, ob die Datenpakete in den Signalgemischen für die optische Netzwerkeinheit ONU1 bestimmt sind oder nicht. Der optischen Netzwerkeinheit ONU1 ist beispielsweise eine Adresse zugewiesen, die in jedem für sie bestimmten Datenpaket am Anfang des Datenpakets übertragen wird. Die Verarbeitungseinheit UNIT beinhaltet eine Photodiode zur optisch/elektrischen Umsetzung der empfangenen Signalgemische und einen Vergleicher zum Vergleich des Datenpaketanfangs mit der Adresse.

Die Verarbeitungseinheit UNIT1 dient des weiteren dazu den zu übertragenden Datenstrom, z.B. die Anforderungssignale für einen Videofilm, zu generieren und dem elektrischen Eingang der elektro/optischen Einheit S1 zuzuführen. Die Generierung erfolgt beispielsweise über einen digitalen Signalprozessor.

Die Verarbeitungseinheit UNIT1 beinhaltet ferner eine Einheit zur Extraktion der Referenzimpulse aus dem empfangenen Signalgemisch. Die Extraktion erfolgt beispielsweise über einen Phasenregelkreis. Der generierte Datenstrom wird auf die extrahierten Referenzimpulse mittels einer Synchronisationseinheit synchronisiert, damit der Datenstrom das Signalgemisch in der elektrisch/optischen Einheit S1 ausschließlich zu den Zeitpunkten moduliert, an denen die Referenztaktsignale anliegen. Zur Synchronisation können die extrahierten Referenzimpulse beispielsweise als Lesetakt eines Zwischenspeichers verwendet werden, in den der generierte Datenstrom zwischenzeitlich abgespeichert wird.

Die elektro/optische Einheit S1 ist beispielsweise ein elektro/optischer Schalter oder ein elektro/optischer Modulator. Die elektro/optische Einheit S1 ist somit eine Einheit mit einem optischen Eingang, einem elektrischen Eingang und einem optischen Ausgang. Abhängig von den elektrischen Eingangssignalen wird das optische Eingangssignal zum Ausgang weitergeleitet oder nicht. Das optische Eingangssignal ist das empfangene Signalgemisch mit den Referenzimpulsen und den Datenpaketen. Das elektrische Eingangssignal ist der zu übertragende Datenstrom. Der Datenstrom ist stets Null, d.h. der elektro/optische Schalter ist stets geöffnet und das empfangene Signalgemisch wird nicht weitergeleitet mit Ausnahme wenn logische Einsen übertragen werden sollen. Bei jeder logischen Eins wird der elektro/optische Schalter geschlossen und ein Referenzimpuls je logische Eins wird zum CDMA-Kodierer C1 weitergeleitet. Mit der elektro/optischen Einheit S1 werden somit die empfangenen Referenzimpulse mit dem in der Verarbeitungseinheit UNIT1 generierten Datenstrom moduliert.

Der CDMA-Kodierer C1 kodiert optische Signale nach dem CDMA-Verfahren. Aus jedem modulierten Referenzimpuls, der dem CDMA-Kodierer C1 zugeführt wird, wird eine Signalfolge erzeugt, deren Abfolge für jede optische Netzwerkeinheit ONU charakteristisch ist, so daß selbst bei einer Überlagerung von mehreren, in der Zentrale OLT gleichzeitig empfangenen Signalfolgen alle Signalfolgen detektierbar sind. Zur Erhöhung der Signalleistung der ausgesendeten Signalfolgen kann zwischen elektro/optischer Einheit S1 und CDMA-Kodierer C1 ein optischer Verstärker geschaltet werden.

Die optische Netzwerkeinheit ONU1 benötigt somit keinen optischen Sender zur Übertragung von Informationen, sondern nutzt die empfangenen Referenzimpulse, die er moduliert und kodiert und an die Zentrale OLT weiterleitet. Aufgrund des asynchronen Zugriffs der optischen Netzwerkeinheiten ONU auf die Glasfaserleitungen ist die Übertragung von Informationen ohne Zeitverzug und ohne Synchronisation der optischen Netzwerkeinheiten ONU untereinander möglich.

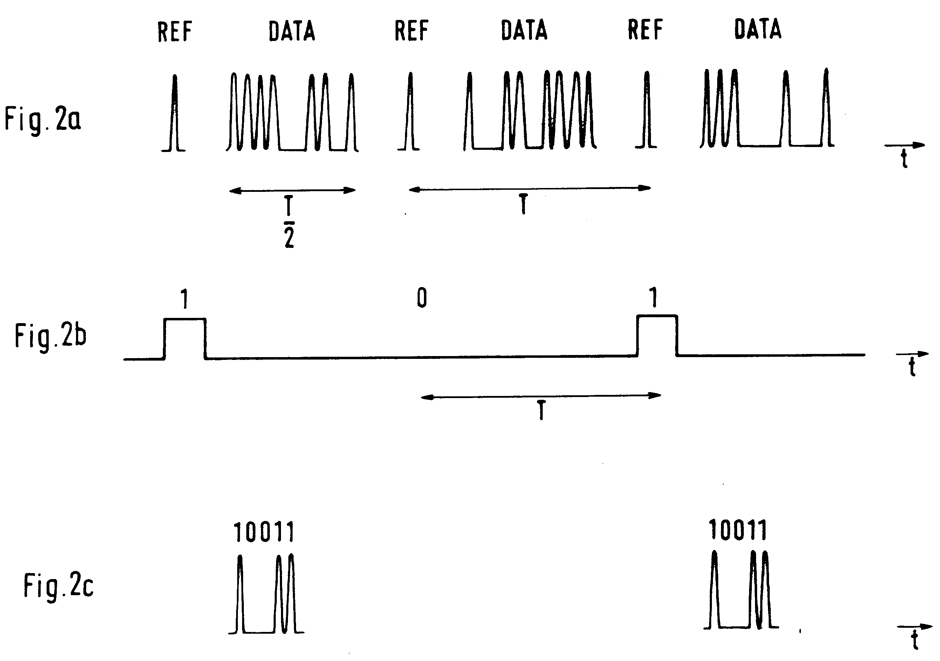

Das Ausführungsbeispiel wird nun weiter anhand von Fig. 2 beschrieben. Fig. 2 zeigt drei Diagramme von Signalverläufen.

Fig. 2a) zeigt ein Diagramm des Signalverlaufs eines empfangenen Signalgemisches. Das Signalgemisch enthält Referenzimpulse und Datenpakete. Zwei aufeinanderfolgende Referenzimpulse liegen die zeitliche Periode T auseinander. Zwei aufeinanderfolgende Datenpakete liegen ebenfalls die zeitliche Periode T auseinander. T ist beispielsweise 6,4ns. Ein Datenpaket hat beispielsweise die Zeitdauer T/2 = 3,2 ns.

Fig. 2b) zeigt ein Diagramm des Signalverlaufs des in der Verarbeitungseinheit UNIT1 generierten Datenstroms. Der Datenstrom ist ein digitaler, binärer Datenstrom, der logische Nullen und Einsen beinhaltet. Zwei aufeinanderliegende Signalwerte liegen die zeitliche Periode T auseinander. T hat beispielsweise den Wert 6,4ns. Damit ist die Datenrate 155 Mbit/s. Der Datenstrom hat stets den Wert Null, mit Ausnahme wenn logische Einsen übertragen werden sollen. Bei jeder logischen Eins hat der Datenstrom für eine Zeitspanne kleiner 3,2ns den Wert Eins. Während jeder logischen Eins wird in der elektro/optischen Einheit S1 ein Referenztaktsignal moduliert. Die Referenzimpulse müssen also auf den Datenstrom synchronisiert sein. Dies erfolgt beispielsweise mit der Synchronisationseinheit und dem Zwischenspeicher, wie zu Fig. 1 beschrieben.

Fig. 2c) zeigt ein Diagramm des Signalverlaufs eines CDMA-kodierten Referenzimpulses. Bei jeder logischen Eins im Datenstrom wird eine für die jeweilige optische Netzwerkeinheit ONU charakteristische Signalfolge aus dem modulierten Referenzimpuls erzeugt. In Fig. 2c) beispielhaft die Bitfolge 10011. Dies entspricht einer 5 Bit-Kodierung. Die Signalfolge kann auch gleichzeitig die Adresse der optischen Netzwerkeinheit ONU sein.

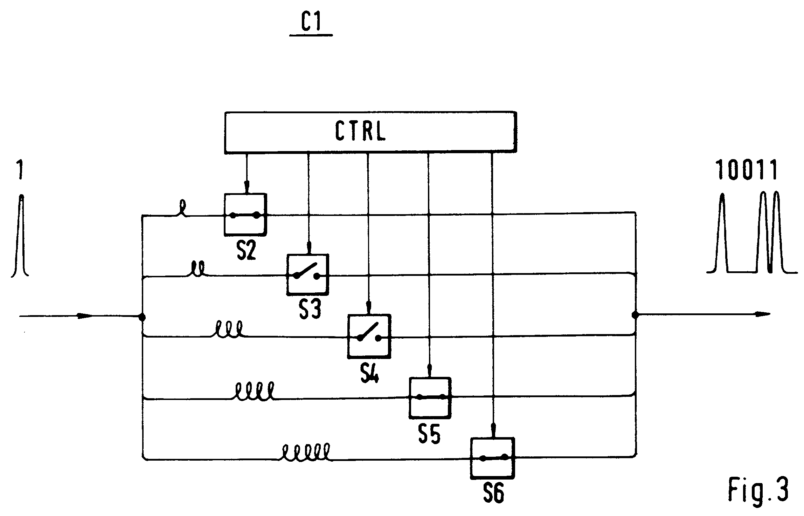

Das Ausführungsbeispiel wird nun abschließend anhand von Fig. 3 beschrieben. Fig. 3 zeigt einen schematisch dargestellten Aufbau des CDMA-Kodierers aus Fig. 1. Der CDMA-Kodierer C1 beinhaltet zwei optische Splitter, fünf elektro/optische Schalter S2 bis S6 und eine Steuereinheit CTRL.

Die mit dem Datenstrom modulierten Referenzimpulse werden dem CDMA-Kodierer C1 über eine Glasfaserleitung zugeführt. Diese Glasfaserleitung wird mittels des ersten optischen Splitters in fünf Glasfaserleitungen gesplittert. Jede dieser fünf Glasfaserleitungen hat eine unterschiedliche Länge, so daß Signale die diese fünf Glasfaserleitungen durchlaufen unterschiedlich verzögert werden. Die fünf Glasfaserleitungen werden mittels des zweiten optischen Splitters zu einer Glasfaserleitung zusammengeführt. Durchläuft ein Referenzimpuls den ersten optischen Splitter, die fünf Glasfaserleitungen und den zweiten optischen Splitter, so ist am Ausgang des zweiten optischen Splitters eine Signalfolge aus fünf optischen Impulsen detektierbar. In jede der fünf Glasfaserleitungen ist ein elektro/optischer Schalter S2 bis S6 eingeschleift, die durch die Steuereinheit CTRL ansteuerbar sind und mittels derer die jeweiligen Glasfaserleitungen unterbrochen werden können, so daß am Ausgang des zweiten optischen Splitters eine für jede optische Netzwerkeinheit ONU charakteristische Signalfolge entsteht. Die Signalfolge kann die Adresse der optischen Netzwerkeinheit ONU repräsentieren, im Beispiel 10011, mit 1 = Impuls, 0 = kein Impuls. Die Einstellung der elektro/optischen Schalter S2 bis S6 kann bei der Initialisierung einmalig vorgenommen werden oder telemetrisch und ggf. dynamisch durch die Zentrale OLT erfolgen. Bei letzteren ist eine Verbindung zwischen Verarbeitungseinheit UNIT1, die die aktuelle Einstellparameter empfängt, und dem CDMA-Kodierer C1 erforderlich. Bei der dynamischen Einstellung werden die aktuellen Einstellparameter nur in Bedarfsfällen übertragen. Beispiel für feste Einstellung: Eine Zentrale OLT ist mit 1000 optischen Netzwerkeinheiten ONU verbunden. Es sind 1000 CDMA-Dekodierer D1 bis Dn in der Zentrale OLT erforderlich. Die CDMA-Kodierung erfordert für 1000 unterschiedliche Einstellungen 10-Bit Signalfolgen.

Beispiel für dynamische Einstellung: Eine Zentrale OLT ist mit 1000 optischen Netzwerkeinheiten ONU verbunden. Von diesen 1000 optischen Netzwerkeinheiten ONU sind beispielsweise lediglich 32 gleichzeitig aktiv, wofür lediglich 5-Bit Signalfolgen erforderlich sind. Will eine Optische Netzwerkeinheit ONU senden, so sendet sie zunächst ihre 10-Bit Adresse zur Zentrale OLT und erhält daraufhin eine aktuelle, unbelegte 5-Bit Signalfolge zur Einstellung der elektro/optischen Schalter und der weiteren Übertragung von Informationen, die dann über den CDMA-Kodierer C1 erfolgt. Bei der dynamischen Zuweisung sind demnach in der Zentrale OLT ein optisch/elektrischer Umsetzer, der die empfangenen Signale ungefiltert empfängt und zur Weiterleitung der Adressen der optischen Netzwerkeinheiten ONU an die Recheneinheit µP dient, und lediglich 32 CDMA-Dekodierer D1 bis Dn erforderlich.

Im Ausführungsbeispiel wird das gesamte empfangene Signalgemisch aus Referenzimpulsen und Datenpaketen zum elektro/optischen Schalter S1 übertragen. In diesem Fall müssen die Logischen Einsen im Datenstrom sehr genau auf die Periode T der Referenzimpulse abgestimmt sein. Im Beispiel muß ihre Zeitdauer kleiner als T/2 sein. Alternativ kann anstelle des asymmetrischen Kopplers K1 ein Mittel zur getrennten Weiterleitung der empfangenen Referenzimpulse und der empfangenen Datenpakete verwendet werden. Über dieses Mittel werden die Referenzimpulse zum elektro/optischen Schalter S1 und die Datenpakete zur Verarbeitungseinheit UNIT1 weitergeleitet. Das Mittel ist beispielsweise durch einen elektro/optischen Schalter realisierbar. Dies hat den Vorteil, daß die logischen Einsen im Datenstrom, der von der Verarbeitungseinheit generiert wird, auch eine Zeitdauer größer T/2, aber kleiner T haben können.

Zusätzlich kann vor das Mittel ein asymmetrischer Koppler geschaltet werden, um beispielsweise 20% des empfangenen Signalgemisches einer Einheit zur Extraktion der Referenzimpulse aus dem empfangenen Signalgemisch zuzuführen. Die Einheit ist beispielsweise aus einem optisch/elektrischen Umsetzer und einen Phasenregelkreis aufgebaut. Sie dient neben der Extraktion der Ansteuerung des Mittels mit den extrahierten Referenzimpulsen. Die extrahierten Referenzimpulse können auch der Verarbeitungseinheit UNIT1 zugeführt werden, z.B. für Synchronisationszwecke.

Im Ausführungsbeispiel werden die Referenzimpulse und die Datenpakete bei ein und derselben Wellenlänge übertragen. Dies erfordert einen gewissen Aufwand bei der ggf. getrennten Weiterleitung beider Signale.

Anstelle bei einer Wellenlänge, können die Referenzimpulse und die Datenpakete bei Verwendung von Glasfasern mit geringer Dispersion auch bei unterschiedlichen Wellenlängen übertragen werden; die Referenzimpulse beispielsweise bei 1300nm und die Datenpakete bei 1550nm. Ein Mittel zur getrennten Weiterleitung dieser beiden Signale kann dann durch einen passiven wellenlängenabhängigen Koppler realisiert werden.

Im Ausführungsbeispiel dienen die Lichtquelle LAS und der elektro/optische Modulator M0D, der mit den elektrischen Signalgemischen angesteuert wird, zur Generierung der optischen Signalgemische. Anstelle der Lichtquelle LAS und des elektro/optischen Modulators MOD kann auch eine direkt ansteuerbare Laserdiode verwendet werden, die mit den elektrischen Signalgemischen der Recheneinheit µP angesteuert und moduliert wird.

## Patentansprüche

1. Optische Netzwerkeinheit (ONU) eines optischen Kommunikationsnetzes (NET) zum Empfang von Signalgemischen aus periodisch ausgesendeten Referenzimpulsen und in den zeitlichen Lücken zwischen den Referenzimpulsen übertragenen Datenpaketen
- mit einer Verarbeitungseinheit (UNIT1) zur Auswertung der empfangenen Datenpakete und zur Generierung eines Datenstroms,
- mit einer elektro/optischen Einheit (S1) zur Modulation der empfangenen Referenzimpulse mit dem generierten Datenstrom, und
- mit einem CDMA-Kodierer (C1) zur Kodierung der modulierten Referenzimpulse nach dem asynchronen CDMA-Verfahren und zum Senden der kodierten Referenzimpulse.

2. Optische Netzwerkeinheit (ONU) nach Anspruch 1,
dadurch gekennzeichnet, daß die Verarbeitungseinheit (UNIT1) eine Einheit zur Extraktion der Referenzimpulse aus dem empfangenen Signalgemisch und eine Synchronisationseinheit zur Synchronisation des generierten Datenstroms auf die extrahierten Referenzimpulse beinhaltet.

3. Optische Netzwerkeinheit (ONU) nach Anspruch 1,
dadurch gekennzeichnet, daß die optische Netzwerkeinheit (ONU) ein Mittel zur getrennten Weiterleitung der empfangenen Referenzimpulse und Datenpakete beinhaltet, und daß die Referenzimpulse zur elektro/optischen Einheit (S1) und die Datenpakete zur Verarbeitungseinheit weitergeleitet werden.

4. Optische Netzwerkeinheit (ONU) nach Anspruch 3,
dadurch gekennzeichnet, daß die optische Netzwerkeinheit (ONU) eine Einheit zur Extraktion der Referenzimpulse aus dem empfangenen Signalgemisch beinhaltet, und daß das Mittel mit den extrahierten Referenzimpulsen ansteuerbar ist.

5. Optische Netzwerkeinheit (ONU) nach Anspruch 3,
dadurch gekennzeichnet, daß das Mittel ein elektro/optischer Schalter ist.

6. Optische Netzwerkeinheit (ONU) nach Anspruch 3,
dadurch gekennzeichnet, daß das Mittel ein passiver wellenlängenabhängiger Koppler ist.

7. Optische Netzwerkeinheit (ONU) nach Anspruch 1,
dadurch gekennzeichnet, daß die Parameter des CDMA-Kodierers (C1) durch die Verarbeitungseinheit (UNIT1) dynamisch einstellbar sind.

8. Zentrale (OLT) eines optischen Kommunikationsnetzes (NET) zum Senden von Signalgemischen aus Referenzimpulsen und Datenpaketen, die in den zeitlichen Lücken zwischen den Referenzimpulsen übertragen werden, und zum Empfang von mehreren unterschiedlichen, nach dem CDMA-Verfahren kodierten Signalen, mit einer Einheit (µP, M0D, LAS) zur Generierung der Signalgemische und mehreren CDMA-Dekodierern (D1, D2, ..., Dn) zur Dekodierung der empfangenen kodierten Signale.

9. Zentrale (OLT) nach Anspruch 8,
dadurch gekennzeichnet, daß die Einheit (µP, MOD, LAS) eine Recheneinheit (µP) zur Generierung von elektrischen Signalgemischen, eine Lichtquelle (LAS) und einen elektro/optischen Modulator (MOD) zur Modulation der Ausgangssignale der Lichtquelle mit den elektrischen Signalgemischen beinhaltet.

10. Zentrale (OLT) nach Anspruch 8,
dadurch gekennzeichnet, daß die Einheit (µP, MOD, LAS) eine Recheneinheit (µP) zur Generierung von elektrischen Signalgemischen und eine mit diesen elektrischen Signalgemischen direkt ansteuerbare Laserdiode beinhaltet.

11. Zentrale (OLT) nach Anspruch 9,
dadurch gekennzeichnet, daß die Zentrale (OLT) einen optisch/elektrischen Umsetzer zum ungefilterten Empfang von Signalen und zur Weiterleitung von Adressen an die Recheneinheit beinhaltet.
